# EUROPÄISCHE PATENTANMELDUNG

(11) **EP 3 210 825 A1**
(43) Veröffentlichungstag der Anmeldung: **30.08.2017**
(21) Anmeldenummer: 17156339.8
(22) Anmeldetag: 15.02.2017
(51) Int. Cl.: B60Q 1/00

(54) **BELEUCHTUNGSVORRICHTUNG FÜR EIN FAHRZEUG, SYSTEM MIT DER BELEUCHTUNGSVORRICHTUNG UND VERFAHREN ZUM BETREIBEN EINER BELEUCHTUNGSVORRICHTUNG**

(30) Priorität: 18.02.2016 DE 102016001915
(71) Anmelder: Audi AG, 85045 Ingolstadt (DE)
(72) Erfinder: Berlitz, Stephan, 86529 Schrobenhausen (DE); Gut, Carsten, 88662 Überlingen (DE); Omerbegovic, Said, 65933 Frankfurt (DE)

(57) **Zusammenfassung**

Die vorliegende Erfindung betrifft eine Beleuchtungsvorrichtung (1) für ein Fahrzeug, umfassend wenigstens eine Scheinwerfereinrichtung (2, 2' 2") mit einem Pixellichtsystem (3, 4), bei dem die Lichtabstrahlung zu einzelnen Pixeln im Umfeld des Fahrzeugs individuell gesteuert werden kann, wobei die Scheinwerfereinrichtung (2, 2' 2") oder die Scheinwerfereinrichtungen (2, 2' 2") der Beleuchtungsvorrichtung (1) wenigstens zwei verschiedene der Pixellichtsysteme (3, 4) aufweist/aufweisen, die auswählbar sind aus einem flächenmodulierbaren LED-Matrix-Pixellichtsystem, flächenmodulierbaren Laser-Matrix-Pixellichtsystem, flächenmodulierbaren LED-DMD-Pixellichtsystem, flächenmodulierbaren Laser-DMD-Pixellichtsystem, flächenmodulierbaren LED-LCD-Pixellichtsystem, flächenmodulierbaren Laser-LCD-Pixellichtsystem, flächenmodulierbaren LED-LCoS-Pixellichtsystem, flächenmodulierbaren Laser-LCoS-Pixellichtsystem und einem strahlgeführten Laser-Pixellichtsystem. Die vorliegende Erfindung umfasst auch ein System mit der Beleuchtungsvorrichtung sowie ein Verfahren zum Betreiben einer Beleuchtungsvorrichtung.

## Beschreibung

Die vorliegende Erfindung betrifft eine Beleuchtungsvorrichtung für ein Fahrzeug, ein System mit der Beleuchtungsvorrichtung und ein Verfahren zum Betreiben einer Beleuchtungsvorrichtung.

Zur Beleuchtung eines einem Kraftfahrzeug hauptsächlich in Fahrrichtung vorausliegenden Bereichs weisen Kraftfahrzeuge bekanntermaßen eine Fahrzeuglichtanlage mit einer Scheinwerfereinrichtung auf, durch die wenigstens die Lichtfunktionen Abblendlicht und Fernlicht realisierbar sind.

Seit einiger Zeit sind auch Scheinwerfereinrichtungen bekannt, mit denen über die oben erwähnten Funktionen eines herkömmlichen Abblendlichts und eines herkömmlichen Fernlichts hinaus weitere Lichtfunktionen realisierbar sind und mit denen eine größere Anzahl an definierten, jeweils vergleichsweise kleinen Segmenten (Pixel) im Umfeld des Kraftfahrzeugs individuell angeleuchtet werden können, wobei die Größe und Position eines jeden anleuchtbaren Segments durch einen vorgebbaren horizontalen und vertikalen Winkelbereich, mit dem das Licht für das jeweilige Segment von der Scheinwerfereinrichtung abgestrahlt wird, und die Entfernung des Segments zur Scheinwerfereinrichtung definiert ist. Die in solchen Scheinwerfereinrichtungen verwendeten lichterzeugenden Einrichtungen werden allgemein als Pixellichtsysteme bezeichnet, wobei mit dem Begriff "Pixel" hier keine Festlegung in Bezug auf eine pixelartige Anordnung von lichtabstrahlenden Elementen bei dem Lichtsystem verbunden ist, sondern vielmehr ganz allgemein eine pixelartige, d.h. in definierbare Segmente unterteilte Anleuchtung einer Umgebung der Scheinwerfereinrichtung gemeint ist.

Ein Beispiel für eine Scheinwerfereinrichtung mit einem Pixellichtsystem ist bspw. ein Voll-LED-Matrix-Scheinwerfer. Das Pixellichtsystem eines solchen Scheinwerfers kann bei derzeit kommerziell erhältlichen Modellen eine Anzahl von bis zu etwa 180 LEDs aufweisen und es ist eine weitere Erhöhung der Anzahl an LEDs in Zukunft zu erwarten. Jeder der LEDs strahlt Licht mit einem vorgegebenen horizontalen und vertikalen Winkelbereich ab, so dass eine der Anzahl an LEDs entsprechende Anzahl an Pixel (Segmenten) im Umfeld des Kraftfahrzeugs angeleuchtet werden kann. Strahlen mehrere LEDs Licht mit einem gleichen vorgegebenen horizontalen und vertikalen Winkelbereich ab, so entspricht die Anzahl an anleuchtbaren Pixel (Segmenten) der Anzahl der so gebildeten LED-Gruppen. Mittels einer Steuereinrichtung können die einzelnen LEDs oder Gruppen von LEDs individuell angesteuert, d.h. eingeschaltet, ausgeschaltet oder gedimmt werden und so können gezielt ein oder mehrere Pixel (Segmente) angeleuchtet, ausgeblendet oder in einer gedimmten Art und Weise angeleuchtet werden. Derartige Pixellichtsysteme werden in der vorliegenden Anmeldung auch als "flächenmodulierbare LED-Matrix-Pixellichtsysteme" genannt.

Anstelle der LED können bei einem Matrix-Pixellichtsystem auch Laserdioden verwendet werden. Bei derzeitigen laserbasierten Fahrzeugscheinwerfer-Einrichtungen wird (unabhängig von der Art der Modulation des erzeugten Laserlichts) üblicherweise mittels eines oder mehrerer Laserdioden blaues Laserlicht erzeugt, das mittels eines Konverters in weißes Licht umgewandelt wird (Phosphorkonversion).

Bei einem "flächenmodulierbaren Laser-Matrix-Pixellichtsystem" ist ein einoder mehrzeiliges Array an Laserdioden (Matrixbeam, MxB) vorgesehen, wobei einzelne Laserdioden - mittels einer Steuereinrichtung - gezielt an-/ausgeschaltet und/oder gedimmt werden können. Da die einzelnen Laserdioden - ähnlich wie die einzelnen LEDs oder LED-Gruppen beim vorerwähnten flächenmodulierbaren LED-Matrix-Pixellichtsystem - jeweils für die Ausleuchtung eines bestimmten Bereichs im Vorfeld des Kraftfahrzeugs vorgesehen sind, können durch ein An-/Ausschalten bzw. Auf-/Abdimmen von Laserdioden bspw. mehrere Markierungs- und/oder Ausblendungs-Bereiche erzeugt werden.

Eine weitere Art von flächenmodulierbarem Pixellichtsystem kann mit Hilfe eines "Digital Micromirror Device" (DMD), d.h. mit Hilfe eines Spiegelarray realisiert werden, bei dem im Bereich von mehreren Hunderttausend bis zu mehreren Millionen (derzeit bis zu etwa 8 Millionen) schwenkbar angeordnete, mikroskopisch kleine Spiegel auf einem Halbleiterchip angeordnet sind. Die Mikrospiegel eines DMD haben einen An-, Aus- und Flat Zustand. Im AN Zustand wird das Licht der Lichtquelle auf die Projektionsfläche abgelenkt. Im "Aus" Zustand wird das Licht absorbiert

Jeder der Mikrospiegel kann - mittels einer Steuereinrichtung - mehrere tausend mal, bspw. 4000 Mal pro Sekunde ein- und ausgeschaltet werden. Wenn ein Mikrospiegel häufiger ein- als ausgeschaltet ist, stellt er einen grauen Punkt dar. Ein Spiegel der noch häufiger ausgeschaltet ist, erzeugt einen Punkt mit noch dunklerem Grau. Auf diese Weise können die Mikrospiegel mehrere Hundert verschiedene Helligkeitsstufen erzeugen.

Weitere Beispiele für flächenmodulierbare Lichtsysteme, die gemäß der vorliegenden Erfindung in Beleuchtungsvorrichtungen für ein Fahrzeug verwendbar sind, sind ein LCD-Pixellichtsystem (LCD = Liquid Crystal Display; Flüssigkristallanzeige), bei dem Licht durch wenigstens eine LCD-Matrix (für eine farbige Darstellung auch drei oder sogar vier LCD-Matrices) hindurchgeleitet wird, und ein LCoS-Pixellichtsystem (LCoS = Liquid Crystal on Silicon; Flüssigkristalle auf einem Silizium(substrat)), bei dem Licht von den Flüssigkristallen reflektiert wird.

LCoS-Pixellichtsysteme beinhalten ein Siliziumsubstrat (oftmals eine Siliziumfolie), einer dünnen Schicht von Flüssigkristallen auf diesem Siliziumsubstrat und eine Abdeckung für die Flüssigkristelle (oftmals in Form einer dünnen Glasscheibe). Das polarisierte Licht einer Lichtquelle (wobei die Polarisierung oftmals mittels eines polarisierenden Spiegels erreicht wird) wird auf die Schicht von Flüssigkristallen geleitet, wo die Flüssigkristallmoleküle durch Anlegung einer entsprechenden elektrischen Spannung so ausgerichtet werden, dass das Licht in der gewünschten Helligkeit reflektiert wird.

Als Lichtquelle für ein flächenmodulierbares Pixellichtsystem kann entweder eine oder mehrere LEDs oder ein oder mehrere Laserlichtquellen, etwa Laserdioden dienen.

Neben flächenmodulierbaren Pixellichtsystemen sind auch strahlgeführte Pixellichtsysteme bekannt, bei denen derzeit ausschließlich Laserlicht verwendet wird. Ein Beispiel für ein strahlgeführtes Laser-Pixellichtsystem ist eines, bei dem Laserlicht mit Hilfe von wenigstens einer Optik oder wenigstens einem Mikrospiegel 1-achsig oder 2-achsig abgelenkt, d.h. gescannt wird, wobei die Helligkeit jedes Pixels (Segment in der Umgebung) durch die Laserleistung und Verweildauer bestimmt wird, die durch die Steuereinrichtung gesteuert werden.

Die hier beschriebenen Pixellichtsysteme und ihre Funktionsweise einschließlich der Möglichkeiten zu deren Steuerung sind dem Fachmann bekannt, so dass in der vorliegenden Anmeldung hierauf nicht näher eingegangen zu werden braucht.

Aus dem Stand der Technik sind bezüglich der erwähnten Grundprinzipien für Scheinwerfereinrichtungen mit einem Pixellichtsystem diverse Weiterentwicklungen und Ausgestaltungen bekannt.

So beschreibt etwa die DE 10 2010 048 659 A1 eine Beleuchtungseinrichtung eines Kraftfahrzeugs mit einer Lichtquelle, einer Mikrospiegelanordnung (DMD), einem Absorber und wenigstens einem optischen Element. Die Beleuchtungseinrichtung ist dazu eingerichtet, Licht der Lichtquelle auf die Mikrospiegelanordnung einfallen zu lassen und von den Mikrospiegelelementen reflektiertes Licht je nach individueller Stellung der Mikrospiegelelemente auf den Absorber oder auf ein optisches Element zu richten. Die Beleuchtungseinrichtung weist ein erstes optisches Element und ein zweites optisches Element auf und ist dazu eingerichtet, die Mikrospiegelelemente individuell so zu verstellen, dass nicht auf das erste optische Element gerichtetes Licht alternativ auf das zweite optische Element oder auf den Absorber gerichtet ist. Das zweite optische Element erlaubt es, Licht, das für die Erzeugung einer bestimmten Lichtverteilung gerade nicht auf das erste optische Element einfallen soll, durch eine Umlenkung auf das zweite optische Element noch für die gewünschte Lichtverteilung zu nutzen.

Die DE 11 2013 003 050 T5 hat ebenfalls eine Fahrzeugleuchte mit einer DMD zum Gegenstand. Mit der Fahrzeugleuchte kann ein erforderliches Lichtverteilungsmuster selbst mit einer herkömmlichen DMD effektiv ausgebildet werden. Dazu weist ein Fahrzeugscheinwerfer eine Projektionslinse, eine zweidimensionale Bildausbildungseinrichtung, die eine Projektionsfläche aufweist, die in der Nähe eines hinteren Brennpunkts der Projektionslinse positioniert ist, und eine Lichtquelle auf, die aufgebaut ist, um die zweidimensionale Bildausbildungseinrichtung mit Licht zu bestrahlen, wobei die Projektionsfläche mittels mehrerer optischer Elemente ausgebildet ist, die in der Projektionsfläche unabhängig voneinander angesprochen werden können, wobei Beleuchtungsmuster gleichzeitig und individuell auf mehreren Projektionsbereichen ausgebildet werden können und die mehreren Beleuchtungsmuster durch die Projektionslinse bezüglich der Leuchte nach vorn projiziert werden, um ein einziges oder mehrere Lichtverteilungsmuster auszubilden.

Aus der DE 10 2012 223 610 A1 ist eine Beleuchtungsvorrichtung für ein Kraftfahrzeug bekannt, umfassend eine Lichtquelle aus einer Anzahl von Halbleiterdioden sowie eine Scaneinrichtung, auf welche Licht der Lichtquelle fällt und welche im Betrieb der Beleuchtungsvorrichtung eine zeitlich variierende Ablenkung des einfallenden Lichts der Lichtquelle und hierdurch eine vorgegebene Lichtverteilung in einem Abstand von der Beleuchtungsvorrichtung erzeugt. Die Beleuchtungsvorrichtung zeichnet sich dadurch aus, dass die Scaneinrichtung zumindest zwei getrennt ansteuerbare Scanner umfasst, auf welche jeweils ein separates, aus dem Licht der Lichtquelle erzeugtes Lichtbündel fällt, dessen Ablenkung durch den jeweiligen Scanner zeitlich variiert wird. Durch die Verwendung von mehr als einem Scanner kann die Ablenkfrequenz der einzelnen Scanner bei unveränderter Auflösung bzw. unverändertem Gradienten der Lichtverteilung herabgesetzt werden, wodurch störende Scaneffekte, die insbesondere bei hohen Fahrzeuggeschwindigkeiten auftreten, vermieden werden.

Und die US 2015/0175054 A1 beschreibt ein strahlgeführtes Laser-Pixellichtsystem mit einer optischen Ablenkvorrichtung und einen Fahrzeugscheinwerfer mit der optischen Ablenkvorrichtung, die eine Lichtquelle, ein Wellenlängen-Umwandlungs-Element und einen drehbaren Spiegel aufweist. Die optische Ablenkvorrichtung kann von der Lichtquelle emittiertes Licht in zwei dimensionale Richtungen scannen, die sich unter einem im Wesentlichen rechten Winkel schneiden, unter Verwendung von Aktuatoren, die durch eine Wechselspannung mit einer niedrigen Frequenz angetrieben werden, und kann auch verschiedene Lichtfarben zur Verfügung stellen durch Leiten des gescannten Lichts in das Wellenlängen-Umwandlungs-Element. Die optische Ablenkvorrichtung weist aufgrund der niedrig-frequenten Ansteuerung eine große Zuverlässigkeit und eine lange Lebensdauer auf und kann als eine Beleuchtungseinrichtung für eine Bühnenbeleuchtung, eine Raumbeleuchtung für Einstimmungsereignisse, etc. verwendet werden. Durch den beschriebenen Gegenstand können auch Fahrzeugscheinwerfer zur Verfügung gestellt werden, die die optische Ablenkvorrichtung verwenden, die im Sinne der Fahrsicherheit eine größere Zuverlässigkeit und eine längere Lebensdauer aufweisen.

Es ist Aufgabe der vorliegenden Erfindung eine im Vergleich zum vorbekannten Stand der Technik verbesserte Beleuchtungsvorrichtung, ein verbessertes System umfassend die Beleuchtungsvorrichtung und ein verbessertes Verfahren zum Betreiben einer Beleuchtungsvorrichtung für ein Fahrzeug zur Verfügung zu stellen. Diese Aufgaben werden gelöst durch die Beleuchtungsvorrichtung gemäß Anspruch 1, das System gemäß Anspruch 6 sowie das Verfahren gemäß Anspruch 7. Vorteilhafte Weiterbildungen der Beleuchtungsvorrichtung und des Verfahrens sind Gegenstand der Unteransprüche.

Erfindungsgemäß wird eine Beleuchtungsvorrichtung für ein Fahrzeug vorgeschlagen, umfassend wenigstens eine Scheinwerfereinrichtung mit einem Pixellichtsystem, bei dem die Lichtabstrahlung zu einzelnen Pixeln im Umfeld des Fahrzeugs individuell gesteuert werden kann.

Die erfindungsgemäße Beleuchtungsvorrichtung ist dadurch gekennzeichnet, dass die Scheinwerfereinrichtung oder die Scheinwerfereinrichtungen der Beleuchtungsvorrichtung wenigstens zwei verschiedene der Pixellichtsysteme aufweist/aufweisen, die auswählbar sind aus einem flächenmodulierbaren LED-Matrix-Pixellichtsystem, einem flächenmodulierbaren Laser-Matrix-Pixellichtsystem, einem flächenmodulierbaren LED-DMD-Pixellichtsystem, einem flächenmodulierbaren Laser-DMD-Pixellichtsystem, einem flächenmodulierbaren LED-LCD-Pixellichtsystem, einem flächenmodulierbaren Laser-LCD-Pixellichtsystem, einem flächenmodulierbaren LED-LCoS-Pixellichtsystem, einem flächenmodulierbaren Laser-LCoS-Pixellichtsystem und einem strahlgeführten Laser-Pixellichtsystem.

Derzeit bekannte Pixellichtsysteme haben zwar eine Auflösung von deutlich mehr als 100 Pixel (Segmente), jedoch haben sie derzeit noch einen beschränkten Öffnungswinkel (d.h. horizontalen und vertikalen Abstrahlwinkel, sofern eine vorgegebene Lichtstärke nicht unterschritten werden soll; bspw. beträgt bei derzeitigen DMD-Systemen mit einem 0,3 Zoll-DMD der Öffnungswinkel max. 12° horizontal und max. 4° vertikal, sofern eine Lichtstärke von 50000 Candela nicht unterschritten werden soll) und eine beschränkte Leistungsfähigkeit (Performance).

Des Weiteren werden bei derzeit bekannten Beleuchtungsvorrichtungen auf Grundlage von Pixellichtsystemen stets für den linken und den rechten Scheinwerfer das gleiche Pixellichtsystem verwendet und wird jedes der Pixellichtsystem dazu verwendet, zumindest teilweise die gleichen Pixel (Segmente) in der Umgebung des Fahrzeugs individuell anzuleuchten. Somit ergibt sich eine Überlappung zwischen dem linken und dem rechten Pixellichtsystem. Um hierbei eine hohe Auflösung erzielen zu können, kann es in Abhängigkeit von der Pixelgröße erforderlich sein, den Abstand zwischen einem Pixellichtsystem und einem Projektionspixel (d.h. anleuchtbaren Segment in der Umgebung des Fahrzeugs) in der Größenordnung von <10mm genau zu bestimmen. Ansonsten kann nicht sichergestellt werden, dass das von der linken Scheinwerfer angeleuchtete Pixel sich mit dem vom rechten Scheinwerfer angeleuchtete Pixel (oder umgedreht) exakt überlappt. Außerdem muss für eine korrekte Überlappung die Straßentopografie sowie die Fahrdynamik mit berücksichtigt werden, da in Abhängigkeit dieser Parameter die Überlappung berechnet werden muss.

Zusätzlich haben die oben erwähnten Pixellichtsysteme unterschiedliche Vor- und Nachteile. So eignen sich bspw. strahlgeführte Laser-Pixellichtsysteme sehr gut zur Markierung von Objekten im Umfeld eines Fahrzeugs, z.B. zum Markieren von Fahrstreifen oder Objekten auf oder an der Straße, da mit derartigen Pixellichtsystemen Licht gezielt durch die Steuerung der Aufenthaltszeit verschoben werden kann. Außerdem kann die Lichtquelle deaktiviert werden sofern in einem abgescannten Bereich nichts projiziert werden soll. Somit eignet sich ein Laserscanner insbesondere für die Projektion von einem "Markierungslicht" (bspw. in einem Baustellenbereich; Baustellenlicht), jedoch ist die Auflösung und der Kontrast bei strahlgeführten (scannenden) Laser-Pixellichtsystemen aufgrund der Phosphorkonversion prinzipbedingt kleiner als bei flächenmodulierten Systemen. Für hochaufgelöste Logoprojektionen eignen sich hingegen flächenmodulierbare Pixellichtsysteme besser, insbesondere solche mit hoher Auflösung.

Durch die vorliegende Erfindung kann eine Beleuchtungsvorrichtung bereitgestellt werden, die für jede Lichtfunktion die jeweils geeignete Technologie mit gegebenenfalls nur dem jeweils benötigten Öffnungswinkel aufweist, indem bei der Beleuchtungsvorrichtung mehrere Technologien, d.h. mehrere verschiedene, auf unterschiedlichen technischen Prinzipien beruhende Pixellichtsysteme vorgesehen sind.

Gemäß einer ersten vorteilhaften Weiterbildung der Beleuchtungsvorrichtung weist diese
- eine Scheinwerfereinrichtung mit wenigstens zwei verschiedenen Pixellichtsystemen auf, oder
- wenigstens zwei Scheinwerfereinrichtungen auf, wobei jede der zwei Scheinwerfereinrichtungen wenigstens ein Pixellichtsystem aufweist und wobei die wenigstens zwei Pixellichtsysteme voneinander verschieden sind.

Gemäß einer zweiten vorteilhaften Weiterbildung der Beleuchtungsvorrichtung ist jedem der verschiedenen Pixellichtsysteme wenigstens eine Lichtfunktion zugeordnet, die auswählbar ist aus Abblendlicht, Fernlicht, adaptives Fernlicht, blendfreies Fernlicht, Stadtlicht, Landstraßenlicht, Autobahnlicht, adaptives Kurvenlicht, Markierungslicht und Logoprojektionslicht, wobei die Lichtfunktionen Markierungslicht und Logoprojektionslicht entweder gemeinsam einem einzigen Pixellichtsystem oder getrennt voneinander zwei verschiedenen Pixellichtsystemen zugeordnet sind.

Hierbei kann vorgesehen sein, dass
- die Lichtfunktionen Markierungslicht und Logoprojektionslicht einem einzigen flächenmodulierbaren LED-Matrix-Pixellichtsystem, flächenmodulierbaren Laser-Matrix-Pixellichtsystem, flächenmodulierbaren LED-DMD-Pixellichtsystem, flächenmodulierbaren Laser-DMD-Pixellichtsystem, flächenmodulierbaren LED-LCD-Pixellichtsystem, flächenmodulierbaren Laser-LCD-Pixellichtsystem, flächenmodulierbaren LED-LCoS-Pixellichtsystem oder flächenmodulierbaren Laser-LCoS-Pixellichtsystem, oder
- die Lichtfunktion Markierungslicht einem einzigen strahlgeführten Laser-Pixellichtsystem und die Lichtfunktion Logoprojektionslicht einem einzigen flächenmodulierbaren LED-Matrix-Pixellichtsystem, flächenmodulierbaren Laser-Matrix-Pixellichtsystem, flächenmodulierbaren LED-DMD-Pixellichtsystem, flächenmodulierbaren Laser-DMD-Pixellichtsystem, flächenmodulierbaren LED-LCD-Pixellichtsystem, flächenmodulierbaren Laser-LCD-Pixellichtsystem, flächenmodulierbaren LED-LCoS-Pixellichtsystem oder flächenmodulierbaren Laser-LCoS-Pixellichtsystem zugeordnet sind.

Von der vorliegenden Erfindung umfasst ist auch ein System mit einer erfindungsgemäßen Beleuchtungsvorrichtung oder einer ihrer vorteilhaften Weiterbildungen oder Ausgestaltungen und eine mit einer Steuereinrichtung zur Steuerung der Lichtabstrahlung von wenigstens einer der wenigstens zwei verschiedenen Pixellichtsysteme in kommunikativer Verbindung stehende Umfeld-Auswertungseinrichtung, Fahrerassistenzeinrichtung, Positionsbestimmungseinrichtung und/oder Navigationseinrichtung.

Ebenso ist von der vorliegenden Erfindung ein Verfahren zum Betreiben einer Beleuchtungsvorrichtung für ein Fahrzeug umfasst, umfassend die Schritte:
a) Bereitstellen einer Beleuchtungsvorrichtung für ein Fahrzeug, umfassend wenigstens zwei verschiedene der Pixellichtsysteme, die auswählbar sind aus einem flächenmodulierbaren LED-Matrix-Pixellichtsystem, einem flächenmodulierbaren Laser-Matrix-Pixellichtsystem, einem flächenmodulierbaren LED-DMD-Pixellichtsystem, einem flächenmodulierbaren Laser-DMD-Pixellichtsystem, einem flächenmodulierbaren LED-LCD-Pixellichtsystem, einem flächenmodulierbaren Laser-LCD-Pixellichtsystem, einem flächenmodulierbaren LED-LCoS-Pixellichtsystem, einem flächenmodulierbaren Laser-LCoS-Pixellichtsystem und einem strahlgeführten Laser-Pixellichtsystem, und eine Steuereinrichtung zur Steuerung der Lichtabstrahlung von wenigstens einem der Pixellichtsysteme,
b) Zuordnen jedem der verschiedenen Pixellichtsysteme wenigstens eine Lichtfunktion, die auswählbar ist aus Abblendlicht, Fernlicht, adaptives Fernlicht, blendfreies Fernlicht, Stadtlicht, Landstraßenlicht, Autobahnlicht, adaptives Kurvenlicht, Markierungslicht und Logoprojektionslicht, wobei die Zuordnung der Lichtfunktionen Markierungslicht und Logoprojektionslicht entweder gemeinsam zu einem einzigen Pixellichtsystem oder getrennt voneinander zu zwei verschiedenen Pixellichtsystemen erfolgt, und
c) Steuern der Lichtabstrahlung von wenigstens einem der Pixellichtsysteme entsprechend der dem jeweiligen Pixellichtsystem zugeordneten Lichtfunktion oder Lichtfunktionen.

Bei dem Verfahren kann in Schritt a) eine Beleuchtungsvorrichtung bereitgestellt werden, die eine Scheinwerfereinrichtung mit wenigstens zwei verschiedenen Pixellichtsysteme aufweist oder eine Beleuchtungsvorrichtung bereitgestellt werden, die wenigstens zwei Scheinwerfereinrichtungen aufweist, wobei jede der zwei Scheinwerfereinrichtungen wenigstens ein Pixellichtsystem aufweist und wobei die wenigstens zwei Pixellichtsysteme voneinander verschieden sind.

Weiter kann in vorteilhafter Weise
- die Zuordnung der Lichtfunktionen Markierungslicht und Logoprojektionslicht zu einem einzigen flächenmodulierbaren LED-Matrix-Pixellichtsystem, flächenmodulierbaren Laser-Matrix-Pixellichtsystem, flächenmodulierbaren LED-DMD-Pixellichtsystem, flächenmodulierbaren Laser-DMD-Pixellichtsystem, flächenmodulierbaren LED-LCD-Pixellichtsystem, flächenmodulierbaren Laser-LCD-Pixellichtsystem, flächenmodulierbaren LED-LCoS-Pixellichtsystem oder flächenmodulierbaren Laser-LCoS-Pixellichtsystem, oder
- die Zuordnung der Lichtfunktion Markierungslicht zu einem einzigen strahlgeführten Laser-Pixellichtsystem und die Zuordnung der Lichtfunktion Logoprojektionslicht zu einem einzigen flächenmodulierbaren LED-Matrix-Pixellichtsystem, flächenmodulierbaren Laser-Matrix-Pixellichtsystem, flächenmodulierbaren LED-DMD-Pixellichtsystem, flächenmodulierbaren Laser-DMD-Pixellichtsystem, flächenmodulierbaren LED-LCD-Pixellichtsystem, flächenmodulierbaren Laser-LCD-Pixellichtsystem, flächenmodulierbaren LED-LCoS-Pixellichtsystem oder flächenmodulierbaren Laser-LCoS-Pixellichtsystem erfolgen.

Weitere Vorteile ergeben sich, wenn
- vor Schritt c) der Steuereinrichtung der Beleuchtungsvorrichtung eine in kommunikativer Verbindung stehende Umfeld-Auswertungseinrichtung, Fahrerassistenzeinrichtung, Positionsbestimmungseinrichtung und/oder Navigationseinrichtung zugeordnet wird, und
- das Steuern der Lichtabstrahlung von wenigstens einem der Pixellichtsysteme entsprechend der dem jeweiligen Pixellichtsystem zugeordneten Lichtfunktion oder Lichtfunktionen und/oder aufgrund von Daten von wenigstens einem der Umfeld-Auswertungseinrichtung, Fahrerassistenzeinrichtung, Positionsbestimmungseinrichtung und Navigationseinrichtung erfolgt.

Die vorliegende Erfindung wird anhand der beigefügten Zeichnungen näher erläutert.

Dabei zeigen:
- Fig. 1: ein erstes schematisches Beispiel einer Beleuchtungsvorrichtung gemäß der vorliegenden Erfindung;
- Fig. 2: ein zweites schematisches Beispiel einer Beleuchtungsvorrichtung gemäß der vorliegenden Erfindung;
- Fig. 3: ein drittes schematisches Beispiel einer Beleuchtungsvorrichtung gemäß der vorliegenden Erfindung;
- Fig. 4: ein schematisches Beispiel für ein System gemäß der vorliegenden Erfindung.

Die Darstellungen in den Figuren sind rein schematisch und nicht maßstabsgerecht. Innerhalb der Figuren sind gleiche oder ähnliche Elemente mit gleichen Bezugszeichen versehen.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

Die in der obigen Beschreibung genannten Merkmale und Merkmalskombinationen sowie die in der nachfolgenden Beschreibung von Ausführungsformen, Ausführungsbeispielen und der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der vorliegenden Erfindung zu verlassen.

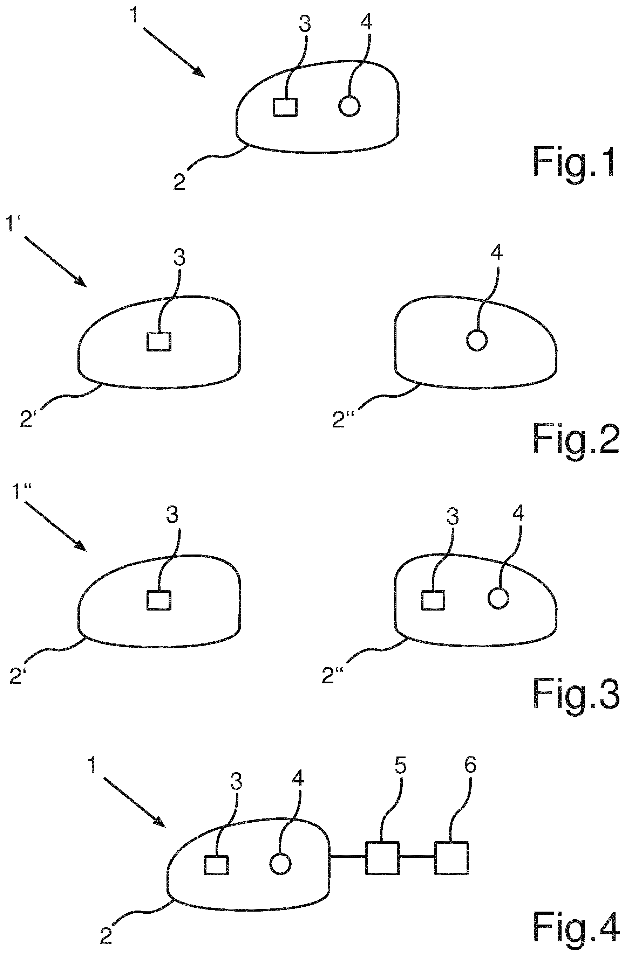

Wie in den Fig. 1 bis Fig. 4 gezeigt ist, zeichnet sich die Beleuchtungsvorrichtung 1, 1' dadurch aus, dass sie wenigstens zwei verschiedenen der Pixellichtsysteme 3, 4 aufweist, die auswählbar sind aus einem flächenmodulierbaren LED-Matrix-Pixellichtsystem, flächenmodulierbaren Laser-Matrix-Pixellichtsystem, flächenmodulierbaren LED-DMD-Pixellichtsystem, flächenmodulierbaren Laser-DMD-Pixellichtsystem, flächenmodulierbaren LED-LCD-Pixellichtsystem, flächenmodulierbaren Laser-LCD-Pixellichtsystem, flächenmodulierbaren LED-LCoS-Pixellichtsystem, flächenmodulierbaren Laser-LCoS-Pixellichtsystem und einem strahlgeführten Laser-Pixellichtsystem. Bei den genannten Pixellichtsystemen 3, 4 kann die Lichtabstrahlung zu einzelnen Pixeln (Segmenten) im Umfeld des Fahrzeugs individuell gesteuert werden.

Sofern in der vorliegenden Anmeldung davon gesprochen wird, dass "verschiedene" Pixellichtsysteme 3, 4 vorhanden sind oder verwendet werden, so ist darunter zu verstehen, dass sich die verschiedenen Pixellichtsysteme 3, 4 durch die Art des verwendeten Lichts (bspw. Laserlicht oder herkömmliches Licht) und/oder durch die Art der möglichen Lichtmodulation (flächenmodulierbar oder strahlgeführt) voneinander unterscheiden.

Dies bedeutet bspw. dass bei einer Beleuchtungsvorrichtung 1' bei einer ersten Scheinwerfereinrichtung 2' ein Pixellichtsystem 3 mit einer "Digital Micromirror Device" (DMD) vorgesehen sein kann, und bei einer zweiten Scheinwerfereinrichtung 2" ein Pixellichtsystem mit einem strahlgeführten Laserlicht 4 (siehe bspw. Fig. 2). Ein weiteres Beispiel wäre etwa, dass bei einer Beleuchtungsvorrichtung 1 in einer Scheinwerfereinrichtung 2 zwei verschiedene Pixellichtsysteme 3, 4 vorgesehen sind, bspw. ein flächenmodulierbares LED-Matrix-Pixellichtsystem und ein strahlgeführtes Laser-Pixellichtsystem (siehe bspw. Fig. 1).

Von der vorliegenden Erfindung sind auch alle weiteren denkbaren Kombinationen aus Scheinwerfereinrichtung(en) 2, 2', 2" und verschiedenen Pixellichtsystemen 3, 4 umfasst, bspw. dass in einer ersten Scheinwerfereinrichtung 2' zwei verschiedene Pixellichtsysteme 3, 4 vorgesehen sind und dass auch in einer zweiten Scheinwerfereinrichtung 2" zwei verschiedene Pixellichtsysteme 3, 4 vorgesehen sind, dass bspw. in einer ersten Scheinwerfereinrichtung 2' nur ein Pixellichtsystem 3, 4 vorgesehen ist und in einer zweiten Scheinwerfereinrichtung 2" zwei Pixellichtsysteme 3, 4 vorgesehen sind. Ein weiteres erfindungsgemäßes Beispiel wäre eine Beleuchtungsvorrichtung 1 mit zwei Scheinwerfereinrichtungen 2, 2', wobei jedoch nur in einem der Scheinwerfereinrichtungen 2, 2' zwei verschiedene Pixellichtsysteme vorgesehen sind, wohingegen die andere Scheinwerfereinrichtungen 2, 2' als ein "herkömmlicher" Scheinwerfer mit einer Halogen-Lichtquelle oder einer Xenon-Lichtquelle ausgebildet ist. Auch kann vorgesehen sein, dass die Beleuchtungsvorrichtung 1, 1' mehr als zwei Scheinwerfereinrichtungen 2, 2', 2" aufweist, dass bei einer Scheinwerfereinrichtung 2, 2', 2" mehr als zwei verschiedene Pixellichtsysteme 3, 4 vorgesehen sind, etc.

Wie in Fig. 3 gezeigt ist, ist von der vorliegenden Erfindung auch eine Beleuchtungsvorrichtung 1 umfasst, die zwei oder mehr gleichartige Pixellichtsysteme 3, 4 umfasst, sofern auch wenigstens ein davon verschiedenes Pixellichtsystem 3, 4 vorgesehen ist.

Neben einem Pixellichtsystem 3, 4 kann eine Scheinwerfereinrichtung 2, 2', 2" selbstverständlich ein oder mehrere weitere, Licht erzeugende/abstrahlende Einrichtungen aufweisen, etwa eine herkömmliche Halogenlampeneinrichtung und/oder eine Xenon-Brenner-Einrichtung.

Es ist von besonderem Vorteil, wenn jedem der verschiedenen Pixellichtsysteme 3, 4 bei der Beleuchtungsvorrichtung 1 wenigstens eine Lichtfunktion zugeordnet ist, die auswählbar sind aus Abblendlicht, Fernlicht, adaptives Fernlicht, blendfreies Fernlicht, Stadtlicht, Landstraßenlicht, Autobahnlicht, adaptives Kurvenlicht, Markierungslicht und Logoprojektionslicht, wobei die Lichtfunktionen Markierungslicht und Logoprojektionslicht entweder gemeinsam einem einzigen Pixellichtsystem 3, 4 oder getrennt voneinander zwei verschiedenen Pixellichtsystemen 3, 4 zugeordnet sind.

Abblendlicht ist asymmetrisch ausgeführt und bei Rechtsverkehr auf der linken Hälfte (bei Linksverkehr auf der rechten Hälfte) bspw. um 1% vertikal beschnitten, wodurch eine Blendung des Gegenverkehrs und von vorausfahrenden Verkehrsteilnehmern vermieden wird.

Durch Fernlicht erfolgt eine Beleuchtung über den Abblendlichtbereich hinaus. Da das Fernlicht (bspw. gemäß der deutschen StVO) nur eingeschaltet werden darf, wenn kein Fahrer eines vorausfahrenden oder entgegenkommenden Kraftfahrzeugs geblendet werden kann, ist im Gegensatz zum Abblendlicht keine exakte Hell-Dunkel-Grenze für das Fernlicht vorgeschrieben.

Bei einem adaptiven Fernlicht wird das Fernlicht in Abhängigkeit von der Geschwindigkeit des Fahrzeugs und dem Erkennen von anderen Verkehrsteilnehmern im Ausleuchtbereich der Fahrzeugscheinwerfer gesteuert. Bspw. kann ein Fernlicht-Assistenzsystem ab einer Geschwindigkeit des Fahrzeugs von 50 km/h oder höher aktiv sein. Durch eine geeignete Umfeld-Sensorik (bspw. unter Verwendung von Kameras für sichtbares Licht oder Infrarotlicht) und eine Umfeld-Auswertungseinrichtung für die von den Sensoriken gelieferten Daten können von dem Fernlicht-Assistenzsystem andere Verkehrsteilnehmer im Ausleuchtbereich der Fahrzeugscheinwerfer erkannt und das Fernlicht so gesteuert werden, dass erkannte Verkehrsteilnehmer nicht geblendet werden. Hierzu wird der Lichtkegel des Fernlichts so weit abgesenkt, dass dieser vor dem oder bei dem erkannten Verkehrsteilnehmer endet.

Bei einem "blendfreien Fernlicht" werden ebenfalls durch eine geeignete Umfeld-Sensorik und eine Umfeld-Auswertungseinrichtung für die von den Sensoriken gelieferten Daten andere Verkehrsteilnehmer im Ausleuchtbereich der Fahrzeugscheinwerfer erkannt. Abweichend vom adaptiven Fernlicht werden beim blendfreien Fernlicht gezielt einzelne Fernlichtsegmente ausgeschaltet. Auf diese Weise können entgegenkommende und vorausfahrende Verkehrsteilnehmer entblendet werden, wobei in den restlichen Bereichen das volle Potential des Fernlichts erhalten bleibt.

Ein "Stadtlicht" kann bspw. dadurch realisiert werden, dass bis zu einer vorgebbaren Geschwindigkeit von bspw. maximal 55 km/h die Hell-Dunkel-Grenze über den vollständigen horizontalen Ausleuchtbereich der Beleuchtungsvorrichtung waagerecht verläuft und gleichzeitig im Vergleich zum Abblendlicht eine breitere und symmetrische Ausleuchtung der Straße vorgesehen ist.

Durch ein "Landstraßenlicht" wird - in Abhängigkeit von der Geschwindigkeit - bei Rechtsverkehr der linke Fahrbahnrand (bei Linksverkehr entsprechend der rechte Fahrbahnrand) weiträumiger und gegebenenfalls auch heller ausgeleuchtet, wodurch der Sichtbereich für den betreffenden Fahrbahnrand bspw. um etwa 10 Meter erweitert wird.

Mittels eines "Autobahnlichts" kann gegebenenfalls mehrstufig der Sichtbereich für den Fahrer erhöht werden. So kann etwa vorgesehen sein, dass ab einer ersten vorgebbaren Geschwindigkeit, etwa ab 90 km/h oder ab 100 km/h, die Helligkeit des Abblendlichts erhöht wird, um so die Reichweite des Abblendlichts zu erhöhen. Alternativ oder ergänzend dazu kann ab einer zweiten Geschwindigkeit, etwa ab 110 km/h oder 120 km/h, die vertikale Beschneidung des Lichtkegels des Abblendlichts von 1 % auf bspw. 0,5 % verringert werden, um so die Reichweite des Abblendlichts weiter zu erhöhen.

Bei einem "adaptiven Kurvenlicht" wird der Lenkbewegung folgend der Lichtschwerpunkt des Abblendlichts oder des Fernlichts in Kurvenrichtung verlagert. Bei einem LED-Matrix-Scheinwerfer wird bspw. das Kurvenlicht durch Dimmen der aussenliegenden LEDs im Scheinwerfer realisiert und erfordert keinerlei Mechanik.

Mittels eines "Markierungslichts" können einzelne Objekte im Umfeld eines Fahrzeugs, wie bspw. am Straßenrand befindliche Personen, am Straßenrand oder auf der Fahrbahn befindliche Tiere, Verkehrsschilder, Abbiegeschilder, Gebäude, etc. gezielt angeleuchtet werden. Diese Objekte werden von einer Umfeld-Sensorik erfasst, von einer Umfeld-Auswertungseinrichtung gegebenenfalls einer vorgebbaren Klasse von Objekten zugeordnet und können, gegebenenfalls unter Berücksichtigung von weiteren Informationen wie Fahrzeuggeschwindigkeit und Entfernung gezielt angeleuchtet werden. Und ein "Logoprojektionslicht" dient dazu, graphische Elemente auf die Fahrbahn oder einen Gegenstand im Vorfeld des Fahrzeugs zu projizieren. Derartige Elemente (Logos) können bspw. ein Abbiegepfeil, eine (einzuhaltende) Geschwindigkeit, ein Warnsymbol (etwa vor einer engen Kurve, einer anderen Gefahrenstelle, einem vorausliegenden Stauende, einer vorausliegenden Baustelle, etc.), eine "virtuelle" Fahrbahnbegrenzung (bspw. in Form eines hellen Streifens auf der Fahrbahn), eine "virtuelle" Fahrspur (bspw. in Form von zwei hellen Streifen auf der Fahrbahn) umfassen. Mittels eines "Markierungslichts" und/oder eines "Logoprojektionslichts" kann nicht nur der Fahrer des Fahrzeugs informiert/gewarnt/aufmerksam gemacht werden, sondern diese Lichtfunktionen können auch der Interaktion/Kommunikation mit anderen Verkehrsteilnehmern (bspw. anderen Fahrern, Fußgängern) dienen.

Bei den oben erwähnten Lichtfunktionen Abblendlicht, Fernlicht, adaptives Fernlicht, blendfreies Fernlicht, Stadtlicht, Landstraßenlicht, Autobahnlicht und adaptives Kurvenlicht bestehen in der Regel keine besonderen Anforderungen an eine Ansteuerung der durch ein Pixellichtsystem 3, 4 individuell anleuchtbaren Pixel (Segmente), d.h. es erfolgt eine eher "großflächige" Anleuchtung einer Umgebung des Fahrzeugs. Somit ist auch für den Fall, dass für diese Lichtfunktionen zwei oder mehr gleiche oder verschiedene Pixellichtsysteme 3, 4 vorgesehen sind, keine genaue Abstimmung zwischen den Pixellichtsystemen 3, 4 erforderlich.

Bei Lichtfunktionen, wie einem "Markierungslicht" und einem "Logoprojektionslicht" sollen dagegen genau definierte Bereiche (Pixel, Segmente) im Umfeld des Fahrzeugs angeleuchtet werden oder Logos (graphische Elemente) erzeugt werden. Daher ist es von Vorteil, wenn, wie dies gemäß einer bevorzugten Weiterbildung der Erfindung vorgesehen ist, die Lichtfunktionen Markierungslicht und Logoprojektionslicht entweder gemeinsam einem einzigen Pixellichtsystem 3, 4 oder getrennt voneinander zwei verschiedenen Pixellichtsystemen 3, 4 zugeordnet sind. Hierdurch kann eine Überlappung von zwei Pixellichtsystemen 3, 4 für die gleiche Lichtfunktion und somit auch das Erfordernis einer hochgenauen Bestimmung des Abstandes zwischen einem Pixellichtsystem 3, 4 zu einem Projektionspixel (angeleuchtetem oder anleuchtbarem Segment) vermieden werden, wodurch sich eine deutliche Vereinfachung im Aufbau und beim Betrieb der Beleuchtungsvorrichtung 1 gemäß der vorliegenden Erfindung ergibt.

Wie oben bereits erwähnt wurde, eignen sich Pixellichtsysteme 3, 4 mit einer strahlgeführten Lichtmodulation, wie etwa ein strahlgeführtes Laser-Pixellichtsystem sehr gut für ein Markierungslicht. Bei einem derartigen Pixellichtsystem 3, 4 ist jedoch die Auflösung und der Kontrast nicht optimal, um auch eine optimale Lösung für ein Logoprojektionslicht darzustellen.

Für eine hoch aufgelöste Logoprojektion eignen sich derzeit flächenmodulierbare Pixellichtsysteme besser als strahlgeführte Pixellichtsysteme.

Eine besonders hohe Auflösung ist aktuell mit Pixellichtsystemen 3, 4 mit einer "Digital Mirror Device" (DMD) zu erreichen. Für eine Logoprojektion, bei dem nur ein kleiner Anteil des auf die DMD fallenden Lichts für ein Logoprojektionslicht benötigt wird, muss jedoch oftmals ein Großteil des zur Verfügung stehenden Lichts, etwa in Richtung eines Absorbers gelenkt und auf diese Weise "vernichtet" werden.

Bei flächenmodulierbaren Matrix-Pixellichtsystemen besteht dieses Problem nicht, jedoch kann mit derzeitigen Systemen noch nicht die Auflösung der DMD-Systeme erreicht werden. Vor diesem Hintergrund wird ein Fachmann für den jeweiligen Anwendungsfall das am besten geeignete Pixellichtsystem für die jeweilige Lichtfunktion wählen.

Wie sich aus der vorstehenden Beschreibung ergibt, kann bei der Beleuchtungsvorrichtung 1 vorgesehen sein, dass bei wenigstens einem der dort vorgesehenen verschiedenen Pixellichtsysteme 3, 4 eine Lichtsteuerung auch in Abhängigkeit von Daten einer Umfeld-Auswertungseinrichtung 6, Fahrerassistenzeinrichtung (6), Positionsbestimmungseinrichtung 6 und/oder Navigationseinrichtung 6 erfolgt. Das sich hierdurch ergebende System umfasst somit eine erfindungsgemäße Beleuchtungsvorrichtung 1 oder eine ihrer vorteilhaften Weiterbildungen oder Ausgestaltungen und eine mit einer Steuereinrichtung 5 der Beleuchtungsvorrichtung 1 zur Steuerung der Lichtabstrahlung von wenigstens einer der wenigstens zwei verschiedenen Pixellichtsysteme 3, 4 in kommunikativer Verbindung stehende UmfeldAuswertungseinrichtung 6, Fahrerassistenzeinrichtung (6), Positionsbestimmungseinrichtung 6 und/oder Navigationseinrichtung 6.

Eine Umfeld-Auswertungseinrichtung 6 wertet die Daten einer (nicht graphisch dargestellten) Umfeld-Erfassungseinrichtung aus. Für das System gemäß der vorliegenden Erfindung können alle bekannten und zukünftig zur Verfügung stehenden Umfeld-Erfassungseinrichtungen verwendet werden, aus deren Daten die Position von Objekten relativ zur Umfeld-Erfassungseinrichtung ermittelt werden kann. Derartige Umfeld-Erfassungseinrichtungen und die darin verwendeten Sensoriken sind heute bereits in großer Zahl und Ausführungsarten und -formen bekannt und werden bereits für diverse Fahrerassistenzeinrichtungen (auch Fahrerassistenzsysteme genannt), wie bspw. für eine Abstandsregeleinrichtung (Adaptive Cruise Control, ACC), eine Einrichtung zur automatischen Kollisionsvermeidung (Notbremsassistent), ein Spurerkennungs- bzw. Spurhalte-Assistenzsystem, ein Toter-Winkel-Assistenzsystem (Spurwechselassistent), ein Verkehrszeichen-Erkennungssystem, eine Einparkhilfe etc. verwendet.

Diesen Einrichtungen/Systemen ist gemeinsam, dass mittels der Umfeld-Erfassungseinrichtungen eine Art zweidimensionales oder dreidimensionales "Abbild" der Umgebung des Fahrzeugs erfasst wird, wobei die Erfassung in geeigneten zeitlichen Abständen (bspw. 10x, 11 x, 12x, 13x, 14x, 15x, 20x, 25x, 30x, 35x, 40x, 45x, 50x oder öfter pro Sekunde) wiederholt wird bzw. werden kann.

Für das System gemäß der vorliegenden Erfindung können alle bekannten 2D- und 3D-Umfeld-Erfassungseinrichtungen verwendet werden, mit denen Daten eines Umfelds des Fahrzeugs erfasst werden können, bspw. solche Umfeld-Erfassungseinrichtungen, die wenigstens eine Kameraeinrichtung für sichtbares Licht, Kameraeinrichtung für Infrarotlicht (Nachtsichtkamera), Radareinrichtung, Lidareinrichtung, einen Laserscanner, eine Ultraschall-Einrichtung und/oder eine Time-of-Flight-Einrichtung aufweisen.

Für die vorliegende Erfindung eignen sich insbesondere räumlich-erfassende bzw. räumlich-messende 3D-Umfeld-Erfassungseinrichtungen, die beispielsweise zumindest eine Stereo-Kameraeinrichtung, eine Time-of-Flight-Kameraeinrichtung (bspw. Photomischdetektor-Kameraeinrichtung, PMD), eine Laserscannereinrichtung, eine Radareinrichtung und/oder ein Lidareinrichtung aufweisen.

Für die vorliegende Erfindung eignen sich jedoch auch solche Umfeld-Erfassungseinrichtungen, mit denen lediglich ein 2D-Umfeld erfasst werden kann. Mittels einer geeigneten Bildauswertung (Software) ist es nämlich möglich, auch aus 2D-Daten die Position eines Objekts im Raum und somit auch eine Position eines Objekts relativ zur Umfeld-Erfassungseinrichtung zu ermitteln.

Der Aufbau und die Funktionsweise von 2D- und 3D-Umfeld-Erfassungseinrichtungen sind dem Fachmann bekannt, so dass hier nicht näher darauf eingegangen zu werden braucht.

Selbstverständlich kann bei dem System gemäß der vorliegenden Erfindung jede geeignete Kombination an 2D- und 3D-Umfeld-Erfassungseinrichtungen verwendet werden bzw. vorhanden sein. Beispielsweise können zwei PMD-Kameraeinrichtungen, die mit Licht unter-schiedlicher Wellenlänge arbeiten, verwendet werden, um einen größeren Eindeutigkeitsbereich zu erhalten, als dies mit nur einer PMD-Kameraeinrichtung möglich wäre. Auch kann beispielsweise eine jede geeignete oder vorteilhafte Kombination aus zumindest einer (Stereo)Kameraeinrichtung, einer PMD-Kameraeinrichtung, einer Radareinrichtung, einer Lidareinrichtung und/oder einer Laserscannereinrichtung verwendet werden bzw. vorhanden sein. Die jeweiligen Einrichtungen können entweder einzeln oder in Kombination eingesetzt werden. Auch können die mit den Sensoriken der jeweiligen Umfeld-Erfassungseinrichtung erfassten Daten in der Umfeld-Auswertungseinrichtung 6 miteinander verglichen werden, um beispielsweise fehlerhafte Daten einer Sensorik zu erkennen oder um insgesamt ein noch präziseres Ergebnisse zu erhalten.

In vielen Fällen kann es von Vorteil sein, wenn die Umfeld-Erfassungseinrichtung eine "aktive" Umfeld-Erfassungseinrichtung ist, d.h. eine Einrichtung, die selbst (ein) Signal(e) (wie etwa Radarwellen, Laserlicht, Infrarotlicht, Ultraschall) aussendet und von (einem) Objekt(en) reflektiere(s) Signal(e) empfängt. Hierdurch kann die Leistungsfähigkeit der Umfeld-Erfassungseinrichtung bspw. unabhängig sein von der/den gerade gegebenen Umgebungshelligkeit/Sichtverhältnissen, wie dies bei "passiven" Kameraeinrichtungen etwa für sichtbares Licht der Fall ist. Dies auch vor dem Hintergrund, dass die vorliegende Erfindung insbesondere bei Nacht, Dunkelheit oder bei schlechten Sichtverhältnissen zum Einsatz kommt (d.h. in Situationen, bei denen die Scheinwerfer eines Fahrzeugs eingeschaltet sind).

Da die wenigstens eine Umfeld-Erfassungseinrichtung dazu dient, ein Umfeld des Fahrzeugs zu erfassen, in dem sich (ein) Objekt(e) befinden kann/können, das/die grundsätzlich auch durch die Beleuchtungsvorrichtung 1 beleuchtet werden kann/können, ist der Erfassungsbereich der Umfeld-Erfassungseinrichtung in vorteilhafter Weise derart ausgerichtet, dass er einen Bereich vor und seitlich vor dem Fahrzeug umfasst.

Die Umfeld-Auswertungseinrichtung 6 ist dazu eingerichtet, Daten der Umfeld-Erfassungseinrichtung zumindest dahin auswerten zu können, an welcher Position relativ zur Umfeld-Erfassungseinrichtung oder zur Scheinwerfereinrichtung 2, 2', 2" sich Objekte im erfassten Umfeld des Fahrzeugs befinden, gegebenenfalls welche Kontur die Objekte aufweisen (Erzeugung einer "bounding box") und gegebenenfalls welcher Klasse die Objekte angehören.

Als Auswertungseinrichtung 6 kann jede bekannte und zukünftig zur Verfügung stehende Auswertungseinrichtung 6 verwendet werden. Als Auswertungseinrichtung 6 kommt insbesondere eine digitale Recheneinrichtung (Computer) in Betracht, auf dem eine entsprechende Auswertungssoftware ablauffähig installiert ist. Die digitale Recheneinrichtung verfügt üblicherweise über einen Arbeitsspeicher, über entsprechende Daten-Ein- und Ausgänge sowie über alle weiteren für ihre Funktionsweise erforderlichen Baugruppen und -elemente.

Bei der Umfeld-Auswertungseinrichtung 6 kann es sich um eine handeln, die der Umfeld-Erfassungseinrichtung zugeordnet ist oder um eine davon getrennte Einrichtung. Sofern eine ausreichende Rechenleistung gegeben und zur Verfügung steht, kann als die für das System verwendete Auswertungseinrichtung 6 eine verwendet werden, die bereits für andere Aufgaben in einem Fahrzeug vorhanden ist.

Die Umfeld-Auswertungseinrichtung 6 kann Signale zur Ansteuerung von wenigstens einer der Pixellichtsysteme 3, 4 zu der Steuereinrichtung 5 ausgeben, wobei die Signale aufgrund von vorgebbaren Kriterien erzeugt werden, etwa sicherheitskritischen Aspekten (bspw. Gefahr eines Verlassens einer Fahrspur, Gefahr der Kollision mit einem anderen Verkehrsteilnehmer), so dass durch wenigstens eines der Pixellichtsysteme 3, 4 eine entsprechende, geeignete Lichtabstrahlung erfolgt bzw. erfolgen kann. Die Umfeld-Auswertungseinrichtung 6 kann somit auch Bestandteil einer Fahrerassistenzeinrichtung (eines Fahrerassistenzsystems) oder einer solchen zugeordnet sein, etwa einem Spurerkennungssystem, Spurhalteassistenzsystem, Spurwechselassistenzsystem (Toter-Winkel-Assistenzsystem), Kollisionswarn- und Schutzsystem, Notbremsassistenzsystem, Verkehrszeichen-Erkennungssystem, Abstandsregeleinrichtung (Adaptive Cruise Control), Aufmerksamkeits-Assistenzsystem, Einparkhilfe-Assistenzsystem (etwa a-coustic parking system, park distance control), (selbstlenkendes) Einpark-Assistenzsystem, etc. In diesen Fällen kann das System gemäß der vorliegenden Erfindung als eines angesehen werden, bei dem die Steuereinrichtung 5 in kommunikativer Verbindung mit wenigstens einem derartigen Fahrerassistenzsystem steht, so dass die Daten zum Ansteuern von wenigstens einem der Pixellichtsysteme 3, 4 letztendlich auch von einem solchen Fahrerassistenzsystem zu der Steuereinrichtung 5 übertragen werden oder übertragen werden können.

Ebenfalls aus dem Stand der Technik hinlänglich bekannt sind - insbesondere satellitengestützte - Positionsbestimmungseinrichtungen 6 und/oder Navigationseinrichtungen 6. Aufgrund einer satellitengestützten Positionsbestimmungseinrichtung 6 kann (etwa mittels Signale der NAVSTAR GPS-Satelliten, der GLONASS-Satelliten oder zukünftig der Galileo-Satelliten) die aktuelle Position eines Fahrzeugs bestimmt werden und für den Fall, dass - etwa mittels TMC (Traffic Message Channel), einer Mobilfunkverbindung, einer mobilen Internetverbindung und/oder einer Car-to-X-Kommunikation - festgestellt wird, dass in der Nähe der aktuellen Position des Fahrzeugs eine Gefahrenstelle existiert (etwa in Form einer engen Kurve, einer Baustelle, eines Verkehrsstaus, etc.), wenigstens eines der Pixellichtsystem 3, 4 derart angesteuert werden, dass es etwa ein Hinweis- oder Warn-Logo auf die Fahrbahn vor dem Fahrzeug projiziert.

Und mittels einer satellitengestützten Navigationseinrichtungen 6 kann nicht nur die aktuelle Position eines Fahrzeugs bestimmt werden, sondern es ist auch das Ziel der Fahrt und die durch die Navigationseinrichtung 6 berechnete Route bekannt. Somit kann durch die Kombination einer Steuereinrichtung 5 mit einer Navigationseinrichtungen 6 über die oben erwähnte, mittels einer Positionsbestimmungseinrichtung 6 mögliche Lichtfunktion auch ein Markierungslicht realisiert werden, durch das bspw. ein Verkehrsschild oder ein Abbiegeschild im Vorfeld des Fahrzeugs gezielt angeleuchtet wird. Auch ist es möglich, den Fahrer eines Fahrzeugs bspw. mittels einer entsprechenden Logoprojektion rechtzeitig an ein Einordnen in eine für einen Abbiegevorgang erforderliche Fahrspur aufmerksam zu machen.

Die "kommunikative Verbindung" zwischen der Steuereinrichtung 5 und der Umfeld-Auswertungseinrichtung 6, Positionsbestimmungseinrichtung 6 und/oder Navigationseinrichtung 6 kann auf jede mögliche Weise realisiert sein, bspw. drahtgebunden, drahtlos oder mittels eines Bussystems (bspw. CAN). Die Steuereinrichtung 5 ist eine dem Fachmann bekannte, die dazu eingerichtet ist, die Lichterzeugung und Lichtabstrahlung entsprechend der einem Pixellichtsystem 3, 4 zugewiesenen Lichtfunktion/Lichtfunktionen und/oder den Daten der Umfeld-Auswertungseinrichtung 6, Positionsbestimmungseinrichtung 6 und/oder Navigationseinrichtung 6 zu steuern.

Von der vorliegenden Erfindung umfasst sind auch alle weiteren, hier nicht ausdrücklich genannten Systeme, die sich für einen Fachmann aus der Beschreibung der Beleuchtungsvorrichtung 1 gemäß der vorliegenden Erfindung, ihren vorteilhaften Weiterbildungen und Ausgestaltungen, den Figuren, der Figurenbeschreibung, dem Verfahren gemäß der vorliegenden Erfindung sowie deren vorteilhafte Weiterbildungen und Ausgestaltungen ergeben. Ebenso sind von der vorliegenden Erfindung umfasst auch alle weiteren, hier nicht ausdrücklich genannten Verfahren, die sich für einen Fachmann aus der Beschreibung der Beleuchtungsvorrichtung 1 gemäß der vorliegenden Erfindung, ihren vorteilhaften Weiterbildungen und Ausgestaltungen, den Figuren, der Figurenbeschreibung und dem System gemäß der vorliegenden Erfindung ergeben.

Soweit in der vorliegenden Anmeldung der Begriff "Fahrzeug" verwendet wird, ist darunter jede Art von Land-, Luft- und Wasser-Fahrzeug, schienen- und nicht schienengebundenem Fahrzeug, insbesondere aber ein Kraftfahrzeug zu verstehen.

Da für einen Fachmann der Aufbau, die Funktionsweise und das mögliche Zusammenwirken der in der vorliegenden Anmeldung genannten Vorrichtungen, Einrichtungen, Baugruppen, Bauelemente, etc. bekannt ist, braucht in der vorliegenden Anmeldung hierauf nicht näher eingegangen zu werden.

## Patentansprüche

1. Beleuchtungsvorrichtung (1) für ein Fahrzeug, umfassend wenigstens eine Scheinwerfereinrichtung (2, 2' 2") mit einem Pixellichtsystem (3, 4), bei dem die Lichtabstrahlung zu einzelnen Pixeln im Umfeld des Fahrzeugs individuell gesteuert werden kann, wobei
die Scheinwerfereinrichtung (2, 2' 2") oder die Scheinwerfereinrichtungen (2, 2' 2") der Beleuchtungsvorrichtung (1) wenigstens zwei verschiedene der Pixellichtsysteme (3, 4) aufweist/aufweisen, die auswählbar sind aus einem flächenmodulierbaren LED-Matrix-Pixellichtsystem, flächenmodulierbaren Laser-Matrix-Pixellichtsystem, flächenmodulierbaren LED-DMD-Pixellichtsystem, flächenmodulierbaren Laser-DMD-Pixellichtsystem, flächenmodulierbaren LED-LCD-Pixellichtsystem, flächenmodulierbaren Laser-LCD-Pixellichtsystem, flächenmodulierbaren LED-LCoS-Pixellichtsystem, flächenmodulierbaren Laser-LCoS-Pixellichtsystem und einem strahlgeführten Laser-Pixellichtsystem, **dadurch gekennzeichnet, dass**
- jedem der verschiedenen Pixellichtsysteme (3, 4) wenigstens eine Lichtfunktion zugeordnet ist, die auswählbar ist aus Abblendlicht, Fernlicht, adaptives Fernlicht, blendfreies Fernlicht, Stadtlicht, Landstraßenlicht, Autobahnlicht, adaptives Kurvenlicht, Markierungslicht und Logoprojektionslicht, und
-- die Lichtfunktionen Markierungslicht und Logoprojektionslicht einem einzigen flächenmodulierbaren LED-Matrix-Pixellichtsystem, flächenmodulierbaren Laser-Matrix-Pixellichtsystem, flächenmodulierbaren LED-DMD-Pixellichtsystem, flächenmodulierbaren Laser-DMD-Pixellichtsystem, flächenmodulierbaren LED-LCD-Pixellichtsystem, flächenmodulierbaren Laser-LCD-Pixellichtsystem, flächenmodulierbaren LED-LCoS-Pixellichtsystem oder flächenmodulierbaren Laser-LCoS-Pixellichtsystem, oder
-- die Lichtfunktion Markierungslicht einem einzigen strahlgeführten Laser-Pixellichtsystem und die Lichtfunktion Logoprojektionslicht einem einzigen flächenmodulierbaren LED-Matrix-Pixellichtsystem, flächenmodulierbaren Laser-Matrix-Pixellichtsystem, flächenmodulierbaren LED-DMD-Pixellichtsystem, flächenmodulierbaren Laser-DMD-Pixellichtsystem, flächenmodulierbaren LED-LCD-Pixellichtsystem, flächenmodulierbaren Laser-LCD-Pixellichtsystem, flächenmodulierbaren LED-LCoS-Pixellichtsystem oder flächenmodulierbaren Laser-LCoS-zugeornet sind.

2. Beleuchtungsvorrichtung (1) gemäß Anspruch 1,
**dadurch gekennzeichnet, dass**
- eine Scheinwerfereinrichtung (2) wenigstens zwei verschiedenen Pixellichtsysteme (3, 4) aufweist oder
- die Beleuchtungsvorrichtung (1) wenigstens zwei Scheinwerfereinrichtungen (2', 2") aufweist, wobei jede der zwei Scheinwerfereinrichtungen (2', 2") wenigstens ein Pixellichtsystem (3, 4) aufweist und wobei die wenigstens zwei Pixellichtsysteme (3, 4) voneinander verschieden sind.

3. System umfassend eine Beleuchtungsvorrichtung (1) gemäß einem der Ansprüche 1 oder 2 und eine mit einer Steuereinrichtung (5) der Beleuchtungsvorrichtung (1) zur Steuerung der Lichtabstrahlung von wenigstens einer der wenigstens zwei verschiedenen Pixellichtsysteme (3, 4) in kommunikativer Verbindung stehende Umfeld-Auswertungseinrichtung (6), Fahrerassistenzeinrichtung (6), Positionsbestimmungseinrichtung (6) und/oder Navigationseinrichtung (6).

4. Verfahren zum Betreiben einer Beleuchtungsvorrichtung für ein Fahrzeug, umfassend die Schritte:
a) Bereitstellen einer Beleuchtungsvorrichtung für ein Fahrzeug, umfassend wenigstens zwei verschiedene der Pixellichtsysteme, die auswählbar sind aus einem flächenmodulierbaren LED-Matrix-Pixellichtsystem, flächenmodulierbaren Laser-Matrix-Pixellichtsystem, flächenmodulierbaren LED-DMD-Pixellichtsystem, flächenmodulierbaren Laser-DMD-Pixellichtsystem, flächenmodulierbaren LED-LCD-Pixellichtsystem, flächenmodulierbaren Laser-LCD-Pixellichtsystem, flächenmodulierbaren LED-LCoS-Pixellichtsystem, flächenmodulierbaren Laser-LCoS-Pixellichtsystem und strahlgeführten Laser-Pixellichtsystem, und eine Steuereinrichtung zur Steuerung der Lichtabstrahlung von wenigstens einem der Pixellichtsysteme,
b) Zuordnen jedem der verschiedenen Pixellichtsysteme wenigstens eine Lichtfunktion, die auswählbar ist aus Abblendlicht, Fernlicht, adaptives Fernlicht, blendfreies Fernlicht, Stadtlicht, Landstraßenlicht, Autobahnlicht, adaptives Kurvenlicht, Markierungslicht und Logoprojektionslicht, wobei
- die Zuordnung der Lichtfunktionen Markierungslicht und Logoprojektionslicht zu einem einzigen flächenmodulierbaren LED-Matrix-Pixellichtsystem, flächenmodulierbaren Laser-Matrix-Pixellichtsystem, flächenmodulierbaren LED-DMD-Pixellichtsystem, flächenmodulierbaren Laser-DMD-Pixellichtsystem, flächenmodulierbaren LED-LCD-Pixellichtsystem, flächenmodulierbaren Laser-LCD-Pixellichtsystem, flächenmodulierbaren LED-LCoS-Pixellichtsystem oder flächenmodulierbaren Laser-LCoS-Pixellichtsystem, oder
- die Zuordnung der Lichtfunktion Markierungslicht zu einem einzigen strahlgeführten Laser-Pixellichtsystem und die Zuordnung der Lichtfunktion Logoprojektionslicht zu einem einzigen flächenmodulierbaren LED-Matrix-Pixellichtsystem, flächenmodulierbaren Laser-Matrix-Pixellichtsystem, flächenmodulierbaren LED-DMD-Pixellichtsystem, flächenmodulierbaren Laser-DMD-Pixellichtsystem, flächenmodulierbaren LED-LCD-Pixellichtsystem, flächenmodulierbaren Laser-LCD-Pixellichtsystem, flächenmodulierbaren LED-LCoS-Pixellichtsystem oder flächenmodulierbaren Laser-LCoS-Pixellichtsystem erfolgt, und
c) Steuern der Lichtabstrahlung von wenigstens einem der Pixellichtsysteme entsprechend der dem jeweiligen Pixellichtsystem zugeordneten Lichtfunktion oder Lichtfunktionen.

5. Verfahren gemäß Anspruch 4, wobei
in Schritt a) eine Beleuchtungsvorrichtung bereitgestellt wird, die eine Scheinwerfereinrichtung mit wenigstens zwei verschiedenen Pixellichtsysteme aufweist oder eine Beleuchtungsvorrichtung bereitgestellt wird, die wenigstens zwei Scheinwerfereinrichtungen aufweist, wobei jede der zwei Scheinwerfereinrichtungen wenigstens ein Pixellichtsystem aufweist und wobei die wenigstens zwei Pixellichtsysteme voneinander verschieden sind.

6. Verfahren gemäß einem der Ansprüche 4 oder 5, wobei vor Schritt c)
- der Steuereinrichtung der Beleuchtungsvorrichtung eine in kommunikativer Verbindung stehende Umfeld-Auswertungseinrichtung, Fahrerassistenzeinrichtung, Positionsbestimmungseinrichtung und/oder Navigationseinrichtung zugeordnet wird, und
- das Steuern der Lichtabstrahlung von wenigstens einem der Pixellichtsysteme durch die Steuereinrichtung entsprechend der dem jeweiligen Pixellichtsystem zugeordneten Lichtfunktion oder Lichtfunktionen und/oder aufgrund von Daten von wenigstens einem der Umfeld-Auswertungseinrichtung, Fahrerassistenzeinrichtung, Positionsbestimmungseinrichtung und Navigationseinrichtung erfolgt.
